# EUROPEAN PATENT SPECIFICATION

(11) **EP 1 894 191 B1**
(45) Date of publication and mention of the grant of the patent: **22.07.2009**
(21) Application number: 06756018.5
(22) Date of filing: 30.05.2006
(51) Int. Cl.: G11B 7/0065, G11B 7/24

(54) **HOLOGRAPHIC STORAGE MEDIUM, METHOD OF MANUFACTURING A HOLOGRAPHIC STORAGE MEDIUM AND METHOD OF READING DATA FROM A HOLOGRAPHIC STORAGE MEDIUM.**
HOLOGRAPHISCHES SPEICHERMEDIUM, VERFAHREN ZUR HERSTELLUNG EINES HOLOGRAPHISCHEN SPEICHERMEDIUMS UND VERFAHREN ZUM LESEN VON DATEN AUS EINEM HOLOGRAPHISCHEN SPEICHERMEDIUM
SUPPORT DE STOCKAGE HOLOGRAPHIQUE, PROCEDE DE FABRICATION DE CE SUPPORT ET PROCEDE DE LECTURE DE DONNEES A PARTIR DE CE SUPPORT

(30) Priority: 08.06.2005 EP 05300465
(43) Date of publication of application: 05.03.2008
(73) Proprietor: Koninklijke Philips Electronics N.V., 5621 BA Eindhoven (NL)
(72) Inventor: Schuurmans, Frank, Société Civile SPID, F-75008 Paris (FR); Liedenbaum, Coen, Société Civile SPID, F-PARIS 75008 (FR)
(74) Representative: Uittenbogaard, Frank
(86) International application number: PCT/IB2006/051707
(87) International publication number: WO 2006/131842

(56) References cited:
- WO-A-01/57602
- WO-A-03/001516
- WO-A2-20/04112045
- JP-A- 63 138 539
- US-A- 5 563 873
- US-A- 6 064 586
- US-A1- 2005 219 667

## Description

### Field of the invention

The present invention relates to a holographic storage medium. Further, the present invention relates to a method of manufacturing a holographic storage medium and a method of reading data from such a medium.

### Background of the invention

In holographic data storage, a whole set of information, also referred to as data page or data set, is stored at once as an optical interference pattern. For this purpose, a holographic storage medium is applied that comprises of a recording medium sandwiched between a substrate and a "superstrate" layer. The recording medium is formed by a thick photosensitive optical material. The holographic storing is achieved by intersecting two coherent laser beams within the storage material. One of those beams, called the object beam, contains the information to be stored; the other beam, called the reference beam is designed to be simple to reproduce, for example as a collimated beam with a substantially planar wave front. The optical interference pattern that results from the laser beams causes chemical and/or physical changes in the photosensitive medium. This interference pattern is replicated in the recording medium as a change in optical properties of the recording medium. When the holographic storage medium comprising the stored interference grating is illuminated with one of the two waves used during recording, some of the incident light is diffracted by the storage gratings in such a fashion that the other wave is reconstructed. Thereby, the information stored can be retrieved.

The invention is targeted to minimize a known issue of holographic media: that is shrinkage. Upon exposure, i.e. writing data, holographic media are known to shrink, which results in less fidelity in reading out the data, thus higher bit error rates are observed. Typical shrinkage values found in literature for photopolymeric media are below 1 percent after complete exposure. Especially for high numerical aperture drives, this value is still relatively large and causes problems. A further issue related to holographic data storage concerns the retrieval of the data pages. During read out it is desired to obtain a servo signal in order to locate the individual sets of data.

WO-A-2004/112045 describes a holographic recording medium and refers to the problem of shrinkage of the recording layer during recording. The effect of the shrinkage is compensated by changing the beam angles.

It is therefore an object of the invention to provide a holographic storage medium and methods related thereto in order to minimize shrinkage and to improve the read out performance.

### SUMMARY OF THE INVENTION

The above objects are solved by the features of the independent claims. Further developments and preferred embodiments of the invention are outlined in the dependent claims.

In accordance with the invention, there is provided a holographic storage medium comprising a recording medium sandwiched between a substrate layer and a superstrate layer, and a regular spacer arrangement provided in the recording medium having optical properties different from optical properties of the recording medium, wherein the regular spacer arrangement defines at least one location in the recording medium that can be used for retrieving a position of at least one data set stored in the recording medium. The idea is based on the experimental evidence that the sandwich structure of holographic media shrinks primarily in the z-direction, i.e. perpendicular to the planes of the sandwich structure. In order to prevent this shrinkage, the recording medium is filled with spacer beads. The refractive index of the spacers differs significantly from the one of the holographic material. Therefore, the spacers scatter light, which would be undesirable when they would be distributed homogeneously over the entire material. However, according to the invention, the spacer arrangement is regular. This regular
This regular pattern determines where the data books (sets) are positioned in the media, i.e. in the area where no spacer is present.

Particularly, the regular spacer arrangement defines rims of data sets. Thus, the rims of the books are visible as a result of the light scattering properties of the spacer. This allows for an easy servo signal to retrieve the location of the books.

Preferably, the regular spacer arrangement comprises a pattern of rectangular lines.

According to a further preferred embodiment, the regular spacer arrangement comprises at least one spiral line.

These are two examples of regular patterns that are applicable as a regular spacer arrangement in accordance with the present invention. Numerous further patterns can be employed as well.

In accordance with a preferred embodiment of the present invention the regular spacer arrangement is applied to at least one of the substrate and superstrate layers before sandwiching the recording layer. On this basis, the regular spacer arrangement can be easily applied, without rendering the manufacturing process unduly complicated.

In this sense, the regular spacer arrangement is applied to at least one of the substrate and superstrate layers by lithography.

Accordingly, the present invention also relates to a method of manufacturing a holographic storage medium comprising a recording medium sandwiched between a substrate layer and a superstrate layer, and a regular spacer arrangement provided in the recording medium having optical properties different from optical properties of the recording medium, the method comprising the steps of:
applying the regular spacer arrangement to at least one of the substrate and superstrate layers, and
sandwiching the recording medium between the substrate layer and the superstrate layer after the step of applying.

As mentioned, this manufacturing method is particularly advantageous when the regular spacer arrangement is applied to at least one of the substrate and superstrate layers by lithography.

The present invention further relates to a method of reading data from a holographic storage medium comprising a recording medium sandwiched between a substrate layer and a superstrate layer, and a regular spacer arrangement provided in the recording medium having optical properties different from optical properties of the recording medium, the method comprising the step of retrieving a position of at least one data set stored in the recording medium on the basis of the regular spacer arrangement.

These and other aspects of the invention will be apparent from and elucidated with reference to the embodiments described hereinafter.

### Brief description of the drawings

Figure 1 shows a cross sectional view of a holographic storage medium according to prior art.
Figure 2 shows a cross sectional view of a holographic storage medium according to the present invention.
Figure 3 shows a top view of a first embodiment of a holographic storage medium according to the present invention.
Figure 4 shows a top view of a second embodiment of a holographic storage medium according to the present invention.

### Description of preferred embodiments

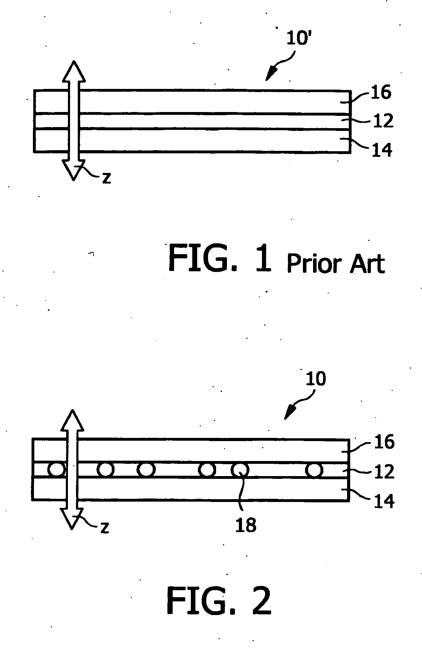

Figure 1 shows a cross sectional view of a holographic storage medium according to prior art. The holographic recording medium 10' comprises of a recording medium 12 that is sandwiched between a substrate layer 14 and a superstrate layer 16. The recording medium 12 comprises a photopolymeric medium. The substrate layer 14 and the superstrate layer 16 can be formed from glass or any other suitable material. The arrow in z direction indicates the primary shrinking direction of the holographic storage medium upon exposure, i.e. writing data in the holographic medium.

Figure 2 shows a cross sectional view of a holographic storage medium according to the present invention. In order to prevent the shrinkage in z direction, the holographic storage medium 10 according to the present invention comprises of a regular spacer arrangement 18 that is provided in the recording medium 12. Additionally, the regular spacer arrangement has optical properties that differ from the optical properties of the recording medium. Particularly, the refractive index of the regular spacer arrangement 18 can be different from the refractive index of the recording medium 12, so as to scatter light during the read-out of the data. On this basis, positions in the holographic recording medium can be retrieved in the sense of the provision of a servo signal.

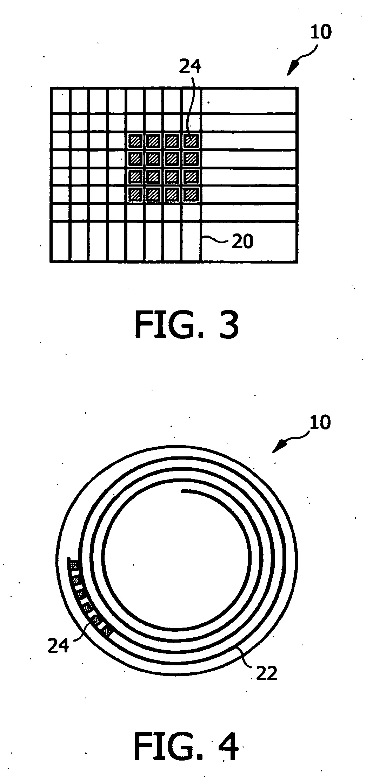

Figure 3 shows a top view of a first embodiment of a holographic storage medium according to the present invention. Rectangular lines 20, i.e. a first plurality of parallel lines that are rectangular to a second plurality of parallel lines, are provided. These lines form the regular spacer arrangement, resulting in a minimum shrinkage. Further, the data books 24 are provided in the spaces between the rectangular spacer arrangement.

Figure 4 shows a top view of a second embodiment of a holographic storage medium according to the present invention. The arrangement comprises a spiral line 22 providing spaces for the data books 24. Thus, a further useful pattern is available in order to retrieve the positions of the data books 24.

Equivalents and modifications not described above may also be employed without departing from the scope of the invention, which is defined in the accompanying claims.

## Claims

1. A holographic storage medium (10) comprising
a recording medium (12) sandwiched between a substrate layer (14) and a superstrate layer (16), **characterized in that**
a regular spacer arrangement (18) is provided in the recording medium having optical properties different from optical properties of the recording medium, wherein
the regular spacer arrangement defines at least one location in the recording medium that can be used for retrieving a position of at least one data set (24) stored in the recording medium.

2. The holographic storage medium (10) according to claim 1, wherein the regular spacer arrangement (18) defines rims of data sets.

3. The holographic storage medium (10) according to claim 1, wherein the regular spacer arrangement (18) comprises a pattern of rectangular lines (20).

4. The holographic storage medium (10) according to claim 1, wherein the regular spacer arrangement comprises at least one spiral line (22).

5. The holographic storage medium (10) according to claim 1, wherein the regular spacer arrangement (18) is applied to at least one of the substrate (14) and superstrate (16) layers before sandwiching the recording layer.

6. The holographic storage medium (10) according to claim 1, wherein the regular spacer arrangement (18) is applied to at least one of the substrate (14) and superstrate (16) layers by lithography.

7. A method of manufacturing a holographic storage medium (10) comprising a recording medium (12) sandwiched between a substrate layer (14) and a superstrate (16) layer, and a regular spacer arrangement (18) provided in the recording medium having optical properties different from optical properties of the recording medium, the method comprising the steps of:
applying the regular spacer arrangement to at least one of the substrate and superstrate layers, and
sandwiching the recording medium between the substrate layer and the superstrate layer after the step of applying.

8. The method of manufacturing a holographic storage medium (10) according to claim 7, wherein the regular spacer arrangement (18) is applied to at least one of the substrate (14) and superstrate (16) layers by lithography.

9. A method of reading data from a holographic storage medium (10) comprising a recording medium (12) sandwiched between a substrate layer (14) and a superstrate (16) layer, and a regular spacer arrangement (18) provided in the recording medium having optical properties different from optical properties of the recording medium, the method comprising the step of retrieving a position of at least one data set (24) stored in the recording medium on the basis of the regular spacer arrangement.

## Patentansprüche

1. Holographisches Speichermedium (10) mit
einem Aufzeichnungsmedium (12), das sandwichartig zwischen einer Substratschicht (14) und einer Superstratschicht (16) eingebracht ist, **dadurch gekennzeichnet, dass**
in dem Aufzeichnungsmedium eine regelmäßige Abstandshalter-Anordnung (18) vorgesehen ist, die optische Eigenschaften hat, die sich von optischen Eigenschaften des Aufzeichnungsmediums unterscheiden, wobei
die regelmäßige Abstandshalter-Anordnung zumindest eine Stelle in dem Aufzeichnungsmedium definiert, die zum Zurückgewinnen einer Position zumindest eines in dem Aufzeichnungsmedium gespeicherten Datensatzes (24) verwendet werden kann.

2. Holographisches Speichermedium (10) nach Anspruch 1, bei dem die regelmäßige Abstandshalter-Anordnung (18) Ränder von Datensätzen definiert.

3. Holographisches Speichermedium (10) nach Anspruch 1, bei dem die regelmäßige Abstandshalter-Anordnung (18) ein Muster aus rechteckigen Linien (20) umfasst.

4. Holographisches Speichermedium (10) nach Anspruch 1, bei dem die regelmäßige Abstandshalter-Anordnung zumindest eine Spirallinie (22) umfasst.

5. Holographisches Speichermedium (10) nach Anspruch 1, bei dem die regelmäßige Abstandshalter-Anordnung (18) auf zumindest entweder der Substrat- (14) oder der Superstratschicht (16) angebracht ist, bevor die Aufzeichnungsschicht dazwischen eingebracht wird.

6. Holographisches Speichermedium (10) nach Anspruch 1, bei dem die regelmäßige Abstandshalter-Anordnung (18) auf zumindest entweder der Substrat- (14) oder der Superstratschicht (16) mittels Lithographie angebracht ist.

7. Verfahren zum Herstellen eines holographischen Speichermediums (10) mit einem Aufzeichnungsmedium (12), das sandwichartig zwischen einer Substratschicht (14) und einer Superstratschicht (16) eingebracht wird, und einer in dem Aufzeichnungsmedium vorgesehenen regelmäßigen Abstandshalter-Anordnung (18), die optische Eigenschaften hat, die sich von optischen Eigenschaften des Aufzeichnungsmediums unterscheiden, wobei das Verfahren die folgenden Schritte umfasst.:
Anbringen der regelmäßigen Abstandshalter-Anordnung auf zumindest entweder der Substrat- oder der Superstratschicht und
Einbringen des Aufzeichnungsmediums zwischen die Substratschicht und die Superstratschicht nach dem Schritt des Anbringens.

8. Verfahren zum Herstellen eines holographischen Speichermediums (10) nach Anspruch 7, bei dem die regelmäßige Abstandshalter-Anordnung (18) auf zumindest entweder der Substrat- (14) oder der Superstratschicht (16) mittels Lithographie angebracht wird.

9. Verfahren zum Auslesen von Daten aus einem holographischen Speichermedium (10) mit einem Aufzeichnungsmedium (12), das sandwichartig zwischen einer Substratschicht (14) und einer Superstratschicht (16) eingebracht ist, und einer in dem Aufzeichnungsmedium vorgesehenen regelmäßigen Abstandshalter-Anordnung (18), die optische Eigenschaften hat, die sich von optischen Eigenschaften des Aufzeichnungsmediums unterscheiden, wobei das Verfahren den Schritt des Zurückgewinnens einer Position zumindest eines in dem Aufzeichnungsmedium gespeicherten Datensatzes (24) auf Basis der regelmäßigen Abstandshalter-Anordnung umfasst.

## Revendications

1. Support de stockage holographique (10) comprenant :
un support d'enregistrement (12) qui est enfermé entre une couche de substrat (14) et une couche de superstrat (16), **caractérisé en ce que :**
un arrangement régulier d'entretoise (18) est prévu dans le support d'enregistrement ayant des propriétés optiques qui sont différentes des propriétés optiques du support d'enregistrement, dans lequel
l'arrangement régulier d'entretoise définit au moins un emplacement dans le support d'enregistrement qui peut être utilisé pour récupérer une position d'au moins un ensemble de données (24) qui sont stockées dans le support d'enregistrement.

2. Support de stockage holographique (10) selon la revendication 1, dans lequel l'arrangement régulier d'entretoise (18) définit les bords des ensembles de données.

3. Support de stockage holographique (10) selon la revendication 1, dans lequel l'arrangement régulier d'entretoise (18) comprend une configuration de lignes rectangulaires (20).

4. Support de stockage holographique (10) selon la revendication 1, dans lequel l'arrangement régulier d'entretoise comprend au moins une ligne en spirale (22).

5. Support de stockage holographique (10) selon la revendication 1, dans lequel l'arrangement régulier d'entretoise (18) est appliqué à au moins une des couches de substrat (14) et de superstrat (16) avant que la couche d'enregistrement ne soit enfermée.

6. Support de stockage holographique (10) selon la revendication 1, dans lequel l'arrangement régulier d'entretoise (18) est appliqué, par lithographie, à au moins une des couches de substrat (14) et de superstrat (16).

7. Procédé de fabrication d'un support de stockage holographique (10) comprenant un support d'enregistrement (12) qui est enfermé entre une couche de substrat (14) et une couche de superstrat (16) et un arrangement régulier d'entretoise (18) qui est prévu dans le support d'enregistrement ayant des propriétés optiques qui sont différentes des propriétés optiques du support d'enregistrement, le procédé comprenant les étapes suivantes consistant à :
appliquer l'arrangement régulier d'entretoise à au moins une des couches de substrat et de superstrat, et
enfermer le support d'enregistrement entre la couche de substrat et la couche de superstrat après l'étape d'application.

8. Procédé de fabrication d'un support de stockage holographique (10) selon la revendication 7, dans lequel l'arrangement régulier d'entretoise (18) est appliqué, par lithographie, à au moins une des couches de substrat (14) et de superstrat (16).

9. Procédé de lecture de données à partir d'un support de stockage holographique (10) comprenant un support d'enregistrement (12) qui est enfermé entre une couche de substrat (14) et une couche de superstrat (16) et un arrangement régulier d'entretoise (18) qui est prévu dans le support d'enregistrement ayant des propriétés optiques qui sont différentes des propriétés optiques du support d'enregistrement, le procédé comprenant l'étape suivante consistant à récupérer une position d'au moins un ensemble de données (24) qui sont stockées dans le support d'enregistrement sur la base de l'arrangement régulier d'entretoise.
